# EUROPEAN PATENT APPLICATION

(11) **EP 3 280 095 A1**
(43) Date of publication of application: **07.02.2018**
(21) Application number: 16182727.4
(22) Date of filing: 04.08.2016
(51) Int. Cl.: H04L 12/28

(54) **METHOD AND ARRANGEMENT FOR MINIMIZING POWER CONSUMPTION IN STANDBY MODE**

(71) Applicant: Helvar Oy Ab, 02150 Espoo (FI)
(72) Inventor: SYVÄRANTA, Lauri, 02150 Espoo (FI); NAAKKA, Harri, 02150 Espoo (FI)
(74) Representative: Berggren Oy, Helsinki & Oulu

(57) **Abstract**

In an operating device of a building automation system in standby mode an auxiliary voltage is produced independently of the production of an output voltage at the voltage output of a first switched-mode power supply in the main power line. At least a proportion of said auxiliary voltage is coupled to a feedback coupling that provides voltage feedback to a control circuit of said first switched-mode power supply, thus preventing the control circuit from triggering the production of an output voltage in said first switched-mode power supply during standby mode.

## Description

### FIELD OF THE INVENTION

The invention relates to the operation of devices that constitute parts of a lighting system or a building automation system. In particular the invention relates to the aim of minimizing the amount of electric power that such devices consume during a standby mode. Additionally the invention relates to the aim of protecting the sensitive components of those parts that remain active during standby mode from abnormally high voltage peaks.

### BACKGROUND OF THE INVENTION

Many operating devices in nodes of a building automation system are essentially controllable power sources. The operating device of a light source can be considered as an example. Its task is to convert the mains voltage, such as 230V AC, to a suitable voltage level for the light source and to deliver the appropriate amount of current so that the light source emits light at desired intensity. If the light source comprises LEDs, the operating device is frequently referred to as a LED driver, and the amount of current it produces as well as its distribution among parallel output circuits can be used to make the light source(s) emit light at desired colour and/or colour temperature. Controllable power sources of corresponding kind are also found in other nodes of building automation systems, like actuators that drive window blinds and the like. A common feature in essentially all of them is that the operated device is not active all the time but may spend shorter or longer periods in a switched-off state.

The operating device must remain "awake" also when the operated device itself is switched off, so that e.g. the LED driver is ready to receive a switch-on command and to switch the lights on. For this purpose the concept of standby mode has been developed. The operating device should consume as little energy as possible during standby mode.

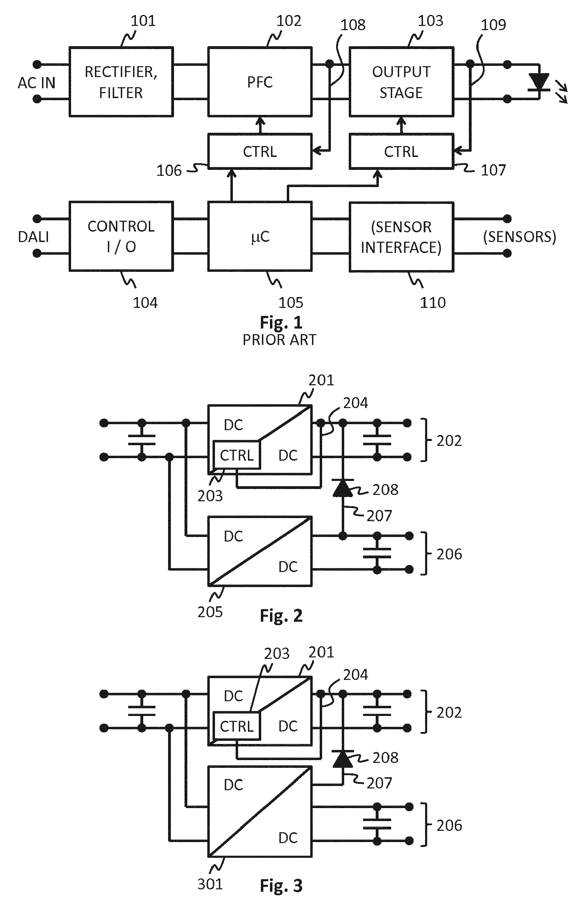

Fig. 1 is a simplified schematic block diagram of an operating device that comprises several stages. The input stage 101 comprises at least a rectifier and an EMI (electromagnetic interference) filter. The PFC (power factor correction) stage 102 comprises a switched-mode power supply configured to optimize the power factor and to convert the rectified and filtered input voltage to a so-called bus voltage Vbus. The output stage 103 comprises another switched-mode power supply configured to convert the bus voltage to the output voltage Vout. A control I/O (input/output) interface 104 couples the operating device to a control bus, such as a DALI (digital addressable lighting interface) bus. The control I/O interface 104 may additionally or alternatively include a wireless interface. A microcontroller 105 executes a stored program to control the operation of the operating device. It may affect the operation of the switched-mode power supplies in the various stages through control circuits 106 and 107. Feedback couplings 108 and 109 ensure that the voltages and currents remain at their desired values. A sensor interface 110 may be provided for allowing the microcontroller 105 to collect information from sensors such as temperature, light level, movement, presence, or other detectors. The sensor interface could also be implemented as a part of the control I/O interface 104. The operating device may comprise galvanic isolation borderlines between and/or within the functional blocks illustrated in fig. 1.

When the microcontroller 105 receives through the control I/O interface 104 a command to switch the lights off, it should command the other functional blocks into standby mode and take the necessary action to ensure that as little electric energy as possible is consumed. One possibility for implementing a standby command within the main power line is to tamper with the feedback 108 or 109 that controls the operation of the switched-mode power supplies in blocks 102 or 103 respectively. Increasing the gain of a voltage feedback loop may invoke the internal limiting features of a switched-mode power supply so that it acts as if the voltage at its output was higher than it actually is. Only after the output voltage has fallen really low, the feedback loop allows the switched-mode power supply to operate again. Since the output consumes very little energy when the lights are off, already a relatively brief period of operation suffices to raise the output voltage again, so as a result the switched-mode power supply in question operates in short bursts during the standby period. This kind of operation is called burst mode.

Although the burst mode helps to save energy, it would be advantageous if even more savings could be achieved. Additionally the operating device may run the risk of sustaining damage to sensitive components that remain active during standby mode when the main power line is not operational.

### SUMMARY OF THE INVENTION

It is an objective of the present invention to provide devices and methods for operating an operating device of a building automation system in standby mode so that it consumes only little energy. Another objective of the present invention is to reduce the energy consumption of the operating device with only few additional components and little additional complicatedness in operation. Yet another objective of the present invention is to protect components of the operating device against exceptionally high voltage peaks.

The objects of the invention are achieved by using an auxiliary power source to cheat a switched-mode power supply in the main power line to believe that its output voltage remains high enough. Certain objectives of the invention are also achieved by clamping the voltage between an inductor and current switch of the auxiliary power source to a capacitor across the main power line.

According to an aspect of the invention there is provided an operating device for a node of a building automation system. The device comprises:
- a first switched-mode power supply configured to produce an output volt-age at a voltage output,
- a control circuit coupled to said first switched-mode power supply and configured to control the production of said output voltage in said first switched-mode power supply,
- a feedback coupling from said voltage output to said control circuit and
- an auxiliary power source configured to produce an auxiliary voltage independently of the production of said output voltage in said first switched-mode power supply;
so that the operating device comprises a coupling from said auxiliary voltage to said feedback coupling for feeding at least a proportion of said auxiliary voltage to said feedback coupling during times when said first switched-mode power supply is not fully operative to produce said output voltage.

According to another aspect of the invention there is provided method for operating an operating device of a building automation system in standby mode, comprising:
- producing an auxiliary voltage independently of the production of an output voltage at the voltage output of a first switched-mode power supply in the main power line, and
- coupling at least a proportion of said auxiliary voltage to a feedback coupling that provides voltage feedback to a control circuit of said first switched-mode power supply, thus preventing the control circuit from triggering the production of an output voltage in said first switched-mode power supply during standby mode.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

- Figure 1: illustrates an operating device of semiconductor light sources,
- figure 2: illustrates a principle of feeding an auxiliary voltage to a feedback coupling,
- figure 3: illustrates another principle of feeding an auxiliary voltage to a feed-back coupling, and
- figure 4: illustrates a part of an operating device according to an embodiment of the invention.

### DETAILED DESCRIPTION

Fig. 2 illustrates a part of an operating device for a node of a building automation system. The main power line of the operating device goes from left to right in the upper part of the drawing. A switched-mode power supply 201 constitutes a part of the main power line. It is configured to produce an output voltage as a voltage output 202. This may be the output voltage of the whole operating device, but it may also be some internal voltage that in turn serves as the input voltage to some later stage along the main power line.

The operating device comprises a control circuit 203 that is coupled to the switched-mode power supply 201 and configured to control the production of the output voltage therein. Fig. 2 depicts the control circuit 203 as an internal part of the switched-mode power supply 201, and indeed it may be implemented for example within a so-called SMPS driver circuit that is an integrated circuit the task of which it to form the switching pulses to the main switching element(s) of the switched-mode power supply 201. Numerous integrated circuits are commercially available that also implement the necessary control functions. However, the control circuit 203 may also be located partly or completely outside the circuitry that otherwise constitutes the switched-mode power supply 201.

In fig. 2 one of the operating modes of the control circuit 203 is voltage feedback control. This means that the operating device comprises a feedback coupling 204 from the voltage output 202 to the control circuit 203. The detected magnitude of the output voltage affects the way in which the control circuit 203 controls the production of the output voltage in the switched-mode power supply 201. In particular if, based on the information it received through the feedback coupling 204, the control circuit 203 finds the output voltage to be at or above a certain maximum limit or target value, it decreases the duty cycle of the switching pulses or otherwise limits the amount of electric energy provided to the voltage output 202 until the output voltage is within allowed limits again. The voltage feedback control applied by the control circuit 203 may comprise also the opposite function, so that if the control circuit 203 finds the output voltage to be at or below a certain minimum limit or target value, it increases the duty cycle of the switching pulses or otherwise boosts the amount of electric energy provided to the voltage output 202 until the output voltage is within allowed limits again.

The operating device comprises an auxiliary power source 205 configured to produce an auxiliary voltage. The production of the auxiliary voltage is independent of the production of the output voltage in the switched-mode power supply 201. Thus the operating device is capable of producing the auxiliary voltage also in situations in which the operation of the switched-mode power supply 201 is stopped or significantly restrained. In fig. 2 the independence of producing the auxiliary voltage is reflected by the fact that the input to the auxiliary power source 205 comes from an earlier point of the main power line than the switched-mode power supply 201.

The reason for producing an auxiliary voltage independently of the production of the output voltage in the switched-mode power supply 201 may be for example that the operating device comprises a processor for controlling at least some parts of the operation of the operating device, and the processor needs to remain awake despite the main power line becoming inactive. The processor is not shown in fig. 2, but the auxiliary voltage source 205 may be coupled to the processor at its voltage output 206, so that the auxiliary voltage source 205 is configured to produce an operating voltage for the processor. Thus in this case the operating voltage for the processor is the same as the auxiliary voltage produced by the auxiliary power source 205.

The operating device comprises a coupling 207 from the auxiliary voltage to the feedback coupling 204 for feeding at least a proportion of the auxiliary voltage to the feedback coupling 204 during times when the switched-mode power supply 201 is not fully operative to produce its output voltage. The coupling 207 may go directly to some point along the feedback coupling 204, or indirectly for example like in fig. 2 where the coupling 207 goes to the voltage output of the switched-mode power supply 202 and from there to the feedback coupling 204. The coupling 207 may comprise a diode 208 and/or other circuit elements to implement the function of a valve: at times when the output voltage of the switched-mode power supply 201 is higher than the auxiliary voltage, the former should not leak to the latter. The diode 208 or similar valve component makes the coupling 207 unidirectionally conductive for preventing the output voltage from propagating from the voltage output 202 towards the auxiliary power source 205.

Feeding at least a proportion of the auxiliary voltage to the feedback coupling 204 "cheats" the control circuit 203 to find the output voltage of the switched-mode power supply 201 higher than it actually is, or at least higher than it would be taken the present operational state of the switched-mode power supply 201. As a result for example in burst mode the beginning of the next switching burst can be delayed or even completely avoided: the voltage that the control circuit 203 detects through the feedback coupling may never drop low enough to trigger the next switching burst, or at least it drops that low only after a relatively long time. Since there is very little power consumption in the part of the main power line to the right from the switched-mode power supply during standby mode, only relatively little electric energy is needed to maintain the voltage at a level that keeps the control circuit 203 from triggering the next switching burst. Having been deliberately dimensioned for much lower power levels, the auxiliary power source 205 works close to its optimal operation point and is capable of producing said small amount of electric energy more efficiently than the switched-mode power supply 201.

Fig. 3 shows an alternative embodiment in which the auxiliary power source 301 comprises at least two outputs, one of which is coupled - through coupling 207 and diode 208 to the voltage output 202 - to produce the auxiliary voltage to the feedback coupling 204 while a second output 206 can be coupled to the processor to provide it with an operating voltage. This alternative embodiment has the advantage that the auxiliary voltage and the operating voltage for the processor can both be selected optimally for their respective uses.

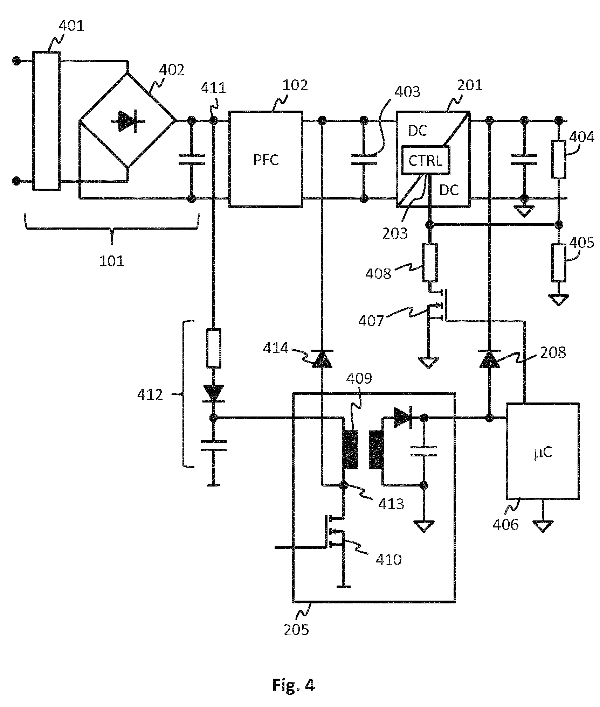

Fig. 4 is a slightly more detailed illustration of certain parts of an operating device for a node of a building automation system. The main power line of the operating device goes from left to right in the upper part of fig. 4. A mains input at the top left leads to an input stage 101 that comprises at least a filter 401 and a rectifier 402. The next functional block in the main power line is a PFC stage 102 configured to synchronize the current drawn from the mains voltage with the mains voltage waveform, and to produce the so-called bus voltage that acts as the input voltage for a switched-mode power supply 201. The output of the switched-mode power supply is the last part on the right of the main power line seen in fig. 4, and it may be the actual voltage output of the operating device, although it may also act as an input to a further stage that is not shown in fig. 4. Thus the switched-mode power supply 201 is a part of the main power line of the operating device between its mains voltage input and an output, if not necessarily "the" output.

A capacitor 403 is provided across the main power line of the operating device. In particular, in the embodiment of fig. 4 the capacitor 403 is located between the PFC stage 102 and the switched-mode power supply 201, i.e. across the bus voltage. Its task is to act as a temporary energy storage of the PFC stage, allowing the operating device to draw mains power according to a squared sine function over time while providing DC to further circuits on the main power line. It may also suppress some high-frequency interference from the bus voltage by absorbing excess charge that may come through the PFC stage e.g. due to an excessive peak in the mains voltage and by partially discharging during transient drops in the output of the PFC stage 102. In order to fulfil these purposes the capacitance of the capacitor 403 is typically relatively large.

A control circuit 203 is coupled to (including the possibility "included in", as in the graphical representation of fig. 4) the switched-mode power supply 201 and configured to control the production of the output voltage in the switched-mode power supply 201. A feedback coupling for providing the control circuit 203 with output voltage information comprises a voltage divider 404, 405, and a connection from its centre point to the control circuit 203.

The operating device of fig. 4 comprises an auxiliary power source 205 configured to produce an auxiliary voltage independently of the production of the output voltage in the switched-mode power supply 201. Additionally the operating device comprises a processor 406 for controlling the operation of the operating device. The auxiliary power source 205 is coupled to the processor 406 and configured to produce an operating voltage for the processor 406. Similarly as in fig. 2 said operating voltage is the same as the auxiliary voltage mentioned above, of which a proportion is coupled to the feedback coupling of the switched-mode power supply 201 during times when the last-mentioned is not fully operative to produce its output voltage. The coupling from the auxiliary voltage to the feedback coupling goes through a diode 208, making the coupling unidirectionally conductive for preventing the output voltage of the switched-mode power supply 201 from propagating towards the auxiliary power source 205.

The processor 406 is coupled to at least one of said feedback coupling and control circuit and configured to selectively increase a gain of said feedback coupling for setting the first switched-mode power supply into standby mode. In fig. 4 the corresponding coupling goes from an output of the processor 406 to the control input of an electronic switch (here: a MOSFET) 407, which can open or close an alternative current path through a part of a voltage divider in the feedback coupling. In fig. 4 the alternative current path goes from the midpoint of the voltage dividing resistors 404 and 405 through an additional resistor 408 to local ground. If this alternative current path is conductive, the effective resistance of the lower part of the voltage divider is smaller and the control circuit 203 detects a smaller proportion of the output voltage than if said alternative current path is non-conductive. Numerous other possibilities exist for making a processor selectively increase a gain of a feedback coupling; for example an analog output from the processor could directly act as (or indirectly change) a changing reference voltage to which the control circuit compares a fixed proportion of the output voltage.

Feedback couplings involve by definition at least some components on the output side of a power supply. Thus if the power supply contains a galvanic separation into a primary side and a secondary side, the natural location of at least some components of such feedback couplings is on the secondary side. Also the controlling processor 406 is typically on the secondary side of the galvanic separation. Using modifications in the gain of a feedback coupling to initiate a standby mode, through actions of the processor 406 that take effect through a coupling from the processor 406 to the secondary side, involves the inherent advantage that the standby command coming from the processor does not need to cross the galvanic separation line, which helps to reduce component count and to avoid some possible reliability issues (e.g. optoisolators are known to become increasingly prone to malfunctioning through aging).

In the embodiment of fig. 4 the auxiliary power source 205 is a switched-mode power supply. For convenience the designation first switched-mode power supply can be used for the one in the main power line, and the auxiliary power source 205 can be called the second switched-mode power supply. The auxiliary power source 205 comprises a current path through an inductor 409 and a current switch 410, which is typical to switched-mode power supplies. Switching pulses to the current switch 410 come from some oscillating circuit, which is not shown in fig. 4 to maintain graphical simplicity and to focus the presentation to features that are linked with embodiments of the present invention. The auxiliary power source is coupled to receive its input voltage from a point 411 of the main power line between the mains voltage input and the first switched-mode power supply 201 to make the generation of the auxiliary voltage independent of the production of the output voltage in the first switched-mode power supply 201. In the embodiment of fig. 4, the point 411 of the main power line from which the auxiliary power source is coupled to receive its input voltage is between the mains voltage input and the power factor correction stage 102. The input voltage comes to the auxiliary power source 205 through a current-limiting and voltage-stabilizing circuit 412.

If exceptionally high voltage peaks occur in the mains voltage, in a circuit configuration of the kind explained above they might propagate through the inductor 409 to the current switch 410 of the auxiliary power source 205, potentially damaging the current switch 410. To prevent damage to the current switch the embodiment of fig. 4 comprises a voltage clamp coupling from a point 413 of the current path through the auxiliary power source 205 to a capacitance 403 across the main power line. In particular, said point 413 is between the inductance 409 and the current switch 410 and said capacitance 403 is located between the power factor correction stage 102 and the first switched-mode power supply 201. The voltage clamp coupling comprises a diode 414 for making it unidirectionally conductive and for preventing the voltage of the main power line from propagating into inappropriate parts of the auxiliary power source 205.

The following explanation summarizes features and advantages of methods according to advantageous embodiments of the invention. As explained earlier, producing an auxiliary voltage independently of the production of an output voltage at the voltage output of a first switched-mode power supply in the main power line involves the advantage that the auxiliary voltage can be used to keep awake such parts of the operating device that need to be at least partly operational even during standby mode when the main power line is closed down or its operation is at least significantly limited. Coupling at least a proportion of such an auxiliary voltage to a feedback coupling that provides voltage feedback to a control circuit of the first switched-mode power supply involves the advantage that the control circuit can be "cheated" to find the output voltage of the first switched-mode power supply higher than it actually is (or higher than it would be, taken just the present operational state of the first switched-mode power supply), thus preventing the control circuit from triggering the production of an output voltage in the first switched-mode power supply during standby mode. The efficiency of the auxiliary power source in producing the necessary (proportion of) auxiliary voltage is very good, which means that savings can be achieved in the overall power consumption of the operating device during standby mode.

A processor of the operating device can be maintained operative during standby mode by providing an operating voltage to the processor. Such an operating voltage can be the same as the auxiliary voltage mentioned above or at least produced by the same auxiliary power source as said auxiliary voltage. The processor typically consumes relatively little energy, so using an auxiliary power source to provide its operating voltage is easy to combine with using the same auxiliary power source to provide the auxiliary voltage needed to "cheat" the control circuit of the first switched-mode power supply - an auxiliary power source dimensioned for efficient operation at relatively low power levels is the optimal choice for both. An auxiliary power source dimensioned for efficient operation at relatively low power levels may also produce less electromagnetic interference during standby mode than a main switched-mode power supply that would run in burst mode.

Yet another advantage is that the auxiliary voltage may maintain some standby charge in one or more capacitors located on the output side of the first switched-mode power supply. Thus at the next ramping up of the operation of the first switched-mode power supply (when the standby mode ends) there is less need to pump charge into the output side capacitors. Consequently the operation of the first switched-mode power supply may be ramped up relatively fast and in a relatively smooth manner.

Yet another advantage is that during a low-power operating mode that is however not the standby mode the auxiliary power source may be used to power an "actual" load, i.e. one that receives its operating power from the first switched-mode power supply during higher power modes. Again, since the efficiency of the auxiliary power supply is better and EMI levels lower than those of the first switched-mode power supply on low power levels, energy can be saved and less EMI is created.

If the auxiliary power source is a switched-mode power supply, a current switch in the auxiliary power source can be protected against voltage-induced damage by conducting abnormally high voltage peaks from a point between an inductor and current switch of the auxiliary power source to a capacitor across the main power line in the operating device. Capacitors across the main power line typically have a relatively large capacitance, so they are well suited for this purpose.

Variations and modifications are possible to the detailed circuits and methods explained above without departing from the scope of the appended claims. For example, although a switched-mode power supply was described as the auxiliary power source in fig. 4, the auxiliary power source may also be some other kind of power source like a linear regulator. The symbolically depicted configuration of the auxiliary power source is greatly simplified in fig. 4, and a real switched-mode power supply used as an auxiliary power source could have another SMPS topology and involve significantly more components. Also as an example if the voltage level that is needed to "cheat" the control circuit of the first switched-mode power supply is higher than what the auxiliary power source could otherwise produce, a voltage doubler or some other voltage multiplication circuit can be used in the coupling from the auxiliary power source to the feedback coupling. As a further example although the drawing symbols in fig. 4 suggest that a galvanic separation exists between the primary and secondary sides of the first switched-mode power supply 201 and the auxiliary power source 205 respectively, the invention is similarly applicable to operating devices in which such galvanic separation is not used.

## Claims

1. An operating device for a node of a building automation system, comprising:
- a first switched-mode power supply configured to produce an output voltage at a voltage output,
- a control circuit coupled to said first switched-mode power supply and configured to control the production of said output voltage in said first switched-mode power supply,
- a feedback coupling from said voltage output to said control circuit and
- an auxiliary power source configured to produce an auxiliary voltage independently of the production of said output voltage in said first switched-mode power supply;
**characterized in that** the operating device comprises a coupling from said auxiliary voltage to said feedback coupling for feeding at least a proportion of said auxiliary voltage to said feedback coupling during times when said first switched-mode power supply is not fully operative to produce said output voltage.

2. An operating device according to claim 1, comprising a processor for controlling the operation of the operating device, wherein said auxiliary power source is coupled to said processor and configured to produce an operating voltage for said processor.

3. An operating device according to claim 2, wherein said operating voltage is the same as said auxiliary voltage.

4. An operating device according to claim 2, wherein said auxiliary power source comprises at least two outputs, of which a first output is coupled to produce said auxiliary voltage to said feedback coupling and a second output is coupled to said processor to provide said operating voltage for said processor.

5. An operating device according to any of claims 2 to 4, wherein said processor is coupled to at least one of said feedback coupling and control circuit and configured to selectively increase a gain of said feedback coupling for setting the first switched-mode power supply into standby mode.

6. An operating device according to claim 5, wherein said first switched-mode power supply contains a galvanic separation into a primary side and a secondary side, and the coupling from said processor to said at least one of the feedback coupling and control circuit comes to the secondary side.

7. An operating device according to any of the preceding claims, wherein said coupling from said auxiliary voltage to said feedback coupling is unidirectionally conductive for preventing said output voltage from propagating towards said auxiliary power source.

8. An operating device according to any of the preceding claims, wherein:
- said auxiliary power source is a second switched-mode power supply and comprises a current path through an inductance and a current switch,
- the operating device comprises a main power line between a mains voltage input and an output of the operating device, of which main power line said first switched-mode power supply is a part,
- said auxiliary power source is coupled to receive its input voltage from a point of the main power line between the mains voltage input and said first switched-mode power supply, and
- the operating device comprises a voltage clamp coupling from a point of said current path between said inductance and current switch to a capacitor across said main power line.

9. An operating device according to claim 8, wherein:
- said main power line comprises a power factor correction stage between said mains voltage input and said first switched-mode power supply,
- said auxiliary power source is coupled to receive its input voltage from a point of the main power line between the mains voltage input and said power factor correction stage, and
- said capacitor is located between said power factor correction stage and said first switched-mode power supply.

10. An operating device according to any of the preceding claims, wherein it is an operating device of semiconductor light sources.

11. A method for operating an operating device of a building automation system in standby mode, comprising:
- producing an auxiliary voltage independently of the production of an output voltage at the voltage output of a first switched-mode power supply in the main power line, and
- coupling at least a proportion of said auxiliary voltage to a feedback coupling that provides voltage feedback to a control circuit of said first switched-mode power supply, thus preventing the control circuit from triggering the production of an output voltage in said first switched-mode power supply during standby mode.

12. A method according to claim 11, comprising maintaining a processor of the operating device operative during said standby mode by providing an operating voltage to said processor, wherein said operating voltage is the same as said auxiliary voltage or at least produced by the same auxiliary power source as said auxiliary voltage.

13. A method according to claim 12, comprising conducting abnormally high voltage peaks from a point between an inductor and current switch of said auxiliary power source to a capacitor across said main power line.
